# EUROPÄISCHE PATENTSCHRIFT

(11) **EP 1 990 709 B1**
(45) Veröffentlichungstag und Bekanntmachung des Hinweises auf die Patenterteilung: **22.09.2010**
(21) Anmeldenummer: 08003984.5
(22) Anmeldetag: 04.03.2008
(51) Int. Cl.: G06F 3/048

(54) **Vorrichtung zur elektronischen Erfassung einer handschriftlichen Benutzereingabe**
Device for identifying a hand-written user entry electronically
Dispositif de saisie électronique d'une saisie utilisateur manuscrite

(30) Priorität: 08.05.2007 US 928194 P
(43) Veröffentlichungstag der Anmeldung: 12.11.2008
(73) Patentinhaber: Stepover GmbH, 70329 Stuttgart (DE)
(72) Erfinder: Günther, Andreas, 70197 Stuttgart (DE)
(74) Vertreter: Kramer - Barske - Schmidtchen

(56) Entgegenhaltungen:
- EP-A- 1 489 481
- US-A1- 2002 129 257
- US-A1- 2006 138 228
- US-B1- 6 177 926

## Beschreibung

### TECHNISCHES GEBIET

Die vorliegende Erfindung betrifft eine Vorrichtung zur elektronischen Erfassung einer handschriftlichen Benutzereingabe wie beispielsweise eine Signatur bzw. Unterschrift. Derartige Vorrichtungen sind auch unter dem Begriff "Signaturpads" bekannt.

### HINTERGRUND DER ERFINDUNG

Vorrichtungen der eingangs genannten Art werden beispielsweise von der Fa. StepOver GmbH / Deutschland u.a. unter den Markennamen: blueMobile Pad, plusPad, blueM Pad und +Pad II/III, vertrieben. Auch die DE 198 59 932 A1 betrifft grundsätzlich derartige Vorrichtungen. Die Vorrichtungen bzw. Signaturpads umfassen im Allgemeinen ein an einer Wand zu befestigendes oder auf einer Unterlage, z.B. ein Tisch oder dergleichen, aufzulegendes Gehäuse, das auf der Gehäusevorderseite ein Eingabefeld aufweist, auf dem ein Benutzer beispielsweise mittels eines normalen Schreibstifts oder auch speziell mit einem auf die Art des Eingabefelds abgestimmten Eingabestifts eine Eingabe tätigen kann. Insbesondere werden derartige Vorrichtungen bzw. Signaturpads dazu benutzt, eine Unterschrift eines Benutzers elektronisch zu erfassen und eventuell weiterzuverarbeiten und/oder zu speichern. In dem Gehäuse ist dafür neben dem Eingabefeld eine Elektronik untergebracht, die die elektronische Erfassung der Benutzereingabe auf dem Eingabefeld ermöglicht und/oder deren digitale Abspeicherung erlaubt. Die Stromversorgung der Vorrichtung erfolgt entweder über ein Netzkabel oder über im Gerät bzw. dem Signaturpad integrierten Batterien oder Akkumulatoren

Bei den eingangs genannten Vorrichtungen bzw. Signaturpads ist das Eingabefeld, auf dem ein Benutzer mit Hilfe einer Schreibeinrichtung eine handschriftliche Benutzereingabe leisten kann, die dann elektronisch erfasst wird, gegenüber den rechten und linken Gehäuserändern dieser Vorrichtung zentriert bzw. mittig angeordnet. Man hat nun festgestellt, dass ein Benutzer auf dem Eingabefeld derartiger bekannter Vorrichtungen nicht optimal unterschreiben kann, da die Geräte bzw. die Gehäuse relativ kleine Außenabmessungen haben, aber aufgrund deren technischen Aufbaus auch eine Mindestdicke von mehr als 1,6 cm oder sogar mehr als 2,0 cm aufweisen. Dadurch kann ein Benutzer einerseits beim Unterschreiben auf dem Eingabefeld seine Schreibhand nicht vollständig auf dem Gehäuse auflegen, andererseits ist es dem Benutzer aufgrund der Mindestdicke nicht zumutbar, weil unbequem beim Schreiben, die Schreibhand zum Teil auf dem Gehäuse und zum Teil auf der Unterlage oder der Wand abzustützen.

Die US 2002/0129257 A1 zeigt eine Vorrichtung zur automatisierten Tätigung einer Überweisung, wozu auch eine elektronischen Erfassung einer handschriftlichen Benutzereingabe notwendig ist. Das dafür vorgesehene Eingabefeld ist in einer Ausführungsform in der rechten unteren Ecke des Vorrichtungsgehäuses angeordnet. Allerdings sind die dieses Eingabefeld umgebenden Flächenbereiche der Vorrichtung mit Schaltern, Tasten etc. versehen, so dass die das Eingabefeld umgebenden Flächen nicht als Handauflagefläche benutzbar sind. Somit muss ein Benutzer seine Hand außerhalb des Gehäuses, beispielsweise auf einem Tisch, auflegen, um die Unterschrift in dem Eingabefeld leisten zu können.

In der US 6,177,926 B1 ist ebenfalls eine Vorrichtung zur elektronischen Erfassung einer handschriftlichen Benutzereingabe gezeigt. Das Eingabefeld ist zwar asymmetrisch in dem Gehäuse angeordnet, jedoch ist eine spezielle Handauflage rechts und/oder links des Eingabefeldes angeordnet. Somit ist die Schreibhaltung weiterhin ergonomisch verbesserungsfähig.

Die EP 1 489 481 A1 offenbart eine Eingabevorrichtung zur Benutzeridentifizierung für einen Computer, die als Mousepad gestaltet ist. Ein Signatur-Sensorfeld zur Aufnahme von eine Unterschrift repräsentierenden Daten ist sowohl asymmetrisch zum rechten und linken Gehäuserand als auch asymmetrisch zum unteren und oberen Gehäuserand angeordnet. Ein Fingerabdruckfeld-Sensor ist im unteren linken Gehäusebereich unterhalb des Eingabefeld zur Benutzeridentifizierung vorhanden und verkleinert die verfügbare Handauflagefläche. Offensichtlich ist dieses Mousepad nicht zur Benutzung in unterschiedlichen Benutzerpositionen geeignet.

Schließlich zeigt die US 2006/0138228 A1 eine Vorrichtung zur elektronischen Erfassung einer handschriftlichen Benutzereingabe, bei der ein LCD-Modul ein gegenüber den Modulrändern asymmetrisch angeordnetes LCD-Display, das als Eingabefeld dient, aufweist. Das LCD-Display ist allerdings so in das Vorrichtungsgehäuse eingebaut, dass das LCD-Display bezüglich der rechten und linken Gehäuseränder mittig platziert ist. Es ist herausgestellt, dass die Ausgestaltung des Eingabefeldes zu dem rechten, linken und unteren Gehäuserand einen großen Handauflagebereich bildet.

Insgesamt ist festzustellen, dass die bekannten Vorrichtungen der eingangs genannten Art zur elektronischen Erfassung einer handschriftlichen Benutzereingabe im Hinblick auf die von einem Benutzer zu leistende Eingabe auf dem Eingabefeld derartiger Vorrichtungen zu verbessern sind.

### DARSTELLUNG DER ERFINDUNG

Das der Erfindung zugrundeliegende technische Problem besteht darin, eine Vorrichtung zur elektronischen Erfassung einer handschriftlichen Benutzereingabe benutzerfreundlicher zu gestalten.

Dieses technische Problem wird gemäß einem ersten Aspekt der vorliegenden Erfindung durch eine Vorrichtung zur elektronischen Erfassung einer handschriftlichen Benutzereingabe gelöst, die ein Gehäuse und ein in dem Gehäuse angeordnetes Eingabefeld aufweist. Das Gehäuse besitzt eine Vorderseite, eine der Vorderseite gegenüberliegende Rückseite, einen rechten Gehäuserand, einen dem rechten Gehäuserand gegenüberliegenden linken Gehäuserand, einen unteren Gehäuserand und einen dem unteren Gehäuserand gegenüberliegenden oberen Gehäuserand. Das Eingabefeld ist dazu ausgebildet, eine handschriftliche Benutzereingabe, die ein Benutzer mit Hilfe einer Schreibeinrichtung auf dem Benutzereingabefeld leistet, elektronisch zu erfassen. In dem Gehäuse ist selbstverständlich die für die elektronische Erfassung und eventuelle Abspeicherung der entsprechenden digitalen Daten, die der durch den Benutzer getätigten Eingabe entsprechen, untergebracht. Das Eingabefeld ist auf der Vorderseite des Gehäuses asymmetrisch zwischen dem rechten Gehäuserand und dem linken Gehäuserand angeordnet. Das Eingabefeld kann zudem dazu ausgebildet sein, die handschriftliche Benutzereingabe und/oder Eingabeelemente etc. darzustellen. Die für einen Benutzer beim Unterschreiben auf dem Eingabefeld zur Verfügung stehende Fläche auf der Vorderseite des Gehäuses ist dadurch noch weiter vergrößert, da das Eingabefeld zudem asymmetrisch zwischen dem unteren Gehäuserand und dem oberen Gehäuserand angeordnet ist. Mit anderen Worten: Das Eingabefeld ist in der Schreibposition für einen Rechtshänder näher zum oberen Gehäuserand hin verlagert, so dass der Abstand zwischen dem oberen Rand des Eingabefelds und dem oberen Gehäuserand kleiner ist als der Abstand zwischen dem unteren Gehäuserand und dem unteren Rand des Eingabefelds. Damit wird gewährleistet, dass die Handauflagefläche auf der Vorderseite des Gehäuses für einen Rechtshänder, das heißt also die Fläche zwischen dem unteren Gehäuserand und dem unteren Rand des Eingabefelds, größer ist als bisher; auch wenn man beispielsweise die Gesamtabmessungen des Gehäuses gegenüber den bekannten Gehäusen derartiger Vorrichtungen bzw. Signaturpads unverändert lässt. Das Benutzereingabefeld ist umschaltbar ausgestaltet, so dass in einer ersten Benutzungsposition eine Benutzereingabe lagegerecht elektronisch erfassbar ist, nämlich beispielsweise in der Lageposition, die für einen Rechtshänder bestimmt ist, und in einer zweiten Benutzungsposition, die von der ersten Benutzungsposition verschieden ist, nämlich beispielsweise um 180° und für einen Linkshänder bestimmt ist, wiederum eine Benutzereingabe lagegerecht elektronisch erfassbar ist. Es wird z.B. eine auf dem Eingabefeld angezeigte Unterschriftslinie sowohl in der ersten als auch in der zweiten Benutzungsposition immer für den Benutzer symbolisch korrekt im unteren Bereich des Eingabefelds angezeigt, damit der Benutzer in der ersten und der zweiten Benutzungsposition auf dieser Linie seine Unterschrift tätigt. Dabei ist die für einen Benutzer beim Unterschreiben auf dem Eingabefeld zur Verfügung stehende Handauflagefläche auf der Vorderseite des Gehäuses sowohl in der ersten als auch in der zweiten Benutzerposition vergrößert.

Der Erfindung gemäß dem ersten Aspekt liegt der Gedanke zugrunde, das Eingebefeld derart außermittig anzuordnen, dass für einen Benutzer, trotz der im Vergleich mit bisherigen Vorrichtungen grundsätzlich gleichen Abmessungen der Gehäuse, die Fläche, die einem Benutzer während der Eingabe zur Auflage der Schreibhand zur Verfügung steht, vergrößert ist. Die asymmetrische Anordnung ermöglicht zudem eine natürlichere Schreibhaltung des Benutzers während der Eingabe.

Erfindungsgemäß kann also für einen Rechtshänder bei der Eingabe mittels der Schreibeinrichtung auf dem Eingabefeld eine größere Fläche zwischen dem rechten Rand des Eingabefelds und dem rechten Gehäuserand und zwischen dem unteren Gehäuserand und dem unteren Rand des Eingabefelds geschaffen werden, wenn das Eingabefeld gegenüber der mittigen Platzierung mehr zum linken Gehäuserand und zum oberen Gehäuserand versetzt angeordnet ist. Gleichzeitig kann in diesem Fall der rechtshändige Benutzer, der die Schreibeinrichtung bei der Eingabe in der rechten Hand hält, die rechte Hand bei der Eingabe wie beim Schreiben auf einem großen Blatt Papier in natürlicherer Haltung auf dem Gehäuse auflegen.

Im Fall einer Ausführung für einen Linkshänder kann erfindungsgemäß das Eingabefeld gegenüber der mittigen Anordnung mehr nach rechts versetzt angeordnet sein, so dass eine größere Auflagefläche für die Schreibhand zwischen dem linken Rand des Eingabefelds und dem linken Gehäuserand geschaffen ist. Auch in diesem Fall kann der linkshändige Benutzer, der die Schreibeinrichtung bei der Eingabe in der linken Hand hält, die linke Hand bei der Eingabe wie beim Schreiben auf einem Blatt Papier in natürlicherer Haltung auf dem Gehäuse auflegen.

Gemäß einer beispielhaften Ausführungsform der vorliegenden Erfindung ist es möglich, die Vorrichtung sowohl für Rechts- und Linkshänder einzusetzen. Dazu ist das Gehäuse von der Position für einen Rechtshänder um 180° um eine imaginäre Symmetrieachse (Achse, die vertikal zur Vorderseite des Gehäuses steht) der Vorrichtung zu drehen. Damit hat auch ein Linkshänder mehr Auflagefläche für seine linke Hand auf der Vorderseite des Gehäuses bei der Eingabe auf dem Eingabefeld, wenn er den Stift in der linken Hand hält.

Wie oben bereits erwähnt, ist es aufgrund der erfindungsgemäßen asymmetrischen Anordnung des Eingabefelds gegenüber den Gehäuserändern möglich, die Handauflagefläche für einen Benutzer trotz beispielsweise unveränderter Gesamtabmessungen des Gehäuses zu vergrößern und eine derartige Vorrichtung sowohl für Rechts- als auch Linkshänder einzusetzen. Zudem kann es gemäß einer weiteren beispielhaften Ausführungsform der vorliegenden Erfindung vorteilhaft sein, die Umschaltbarkeit des Eingabefelds so auszugestalten, dass die zu leistende Eingabe (z.B. eine Unterschrift oder Signatur) lagegerecht korrekt erfasst wird. Mit anderen Worten: Das dem Eingabefeld zuzuordnenden Koordinatensystem wird in Abhängigkeit der Benutzungsposition geändert, so dass unabhängig davon, in welcher Benutzungsposition die Eingabe getätigt wurde, die erfassten zugehörigen Daten gleich sind.

In einer weiteren beispielhaften Ausführungsform der vorliegenden Erfindung ist auf dem Benutzereingabefeld ein visuelles Symbol angezeigt, das aktivierbar ist. Die Aktivierbarkeit kann so ausgebildet sein, dass durch Tippen auf das Symbol mittels dem Schreibelement eine Umschaltung des Benutzereingabefelds von einer Benutzungsposition in eine andere Benutzungsposition erfolgt, beispielsweise von einer Rechtshänderbenutzerposition in eine Benutzungsposition für einen Linkshänder. Gleichzeitig wird elektronisch geschaltet, dass die Unterschrift dann beispielsweise um 180° verdreht durch einen Linkshänder erfolgt. Die Abspeicherung der erfassten Daten wird dann umgerechnet in ein allgemeines Koordinatensystem, das auch für die Unterschrift eines Rechtshänders gilt.

Gemäß einem weiteren Aspekt der vorliegenden Erfindung wird die Benutzerfreundlichkeit einer elektronischen Vorrichtung der eingangs genannten Art bzw. eines Signaturpads dadurch verbessert, dass die elektronischen Bauelemente, die zum Betrieb des Benutzereingabefelds und für die elektronische Erfassung der Benutzereingabe notwendig sind, im Gehäuseinnern zwischen dem unteren Gehäuserand und dem Benutzereingabefeld platziert sind. Entgegen den bisherigen Ausgestaltungen von Signaturpads mit Bildschirm (wie beispielsweise LCD-Display, TFT-Display etc.), bei denen diese elektronischen Bauelemente unterhalb des Benutzerfelds platziert waren, ist es nunmehr möglich, die Gesamtdicke des Gehäuses und somit der Vorrichtung an sich zu verringern. Beispielsweise ist es möglich, die Gesamt- oder Maximaldicke des Gehäuses bzw. der Vorrichtung auf ca. 1,3 cm oder sogar weniger als ca. 1,1 cm zu verringern. Für einen Benutzer kann es weitaus angenehmer sein, auf einem derart flachen Gehäuse beim Unterschreiben seine Hand auf dem Gehäuse bzw. essen Auflagefläche abzulegen als bisher, da dann die "Abstufung" zur Unterlage weniger spürbar und damit für den Benutzer weniger unangenehm ist. Hierzu ist ergänzend anzumerken, dass die Verlagerung der elektronischen Bauelemente, die die Verringerung der Gesamtdicke der Vorrichtung bzw. des Gehäuses der Vorrichtung ermöglichen kann, auch unabhängig von der asymmetrischen Anordnung des Benutzereingabefelds gegenüber dem Gehäuse vorgesehen werden kann.

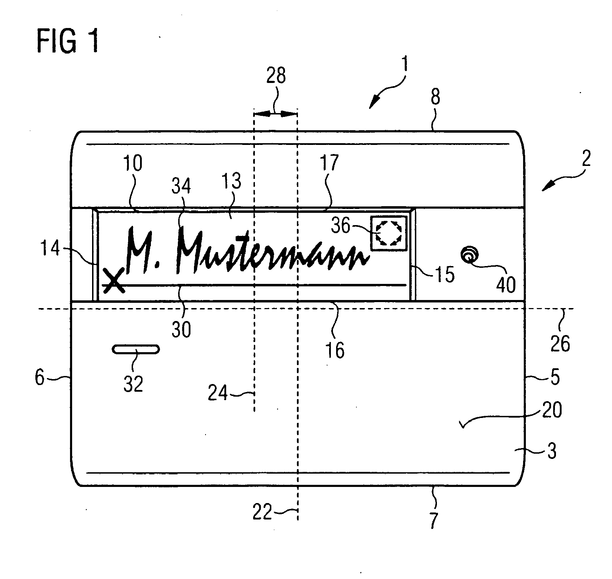

Der guten Ordnung halber ist anzumerken, dass die Begriffe "rechts", "links", "unten", "oben" nur beispielhaft zur Kennzeichnung der jeweiligen Bauteile eingeführt sind. Sie beziehen sich insbesondere auf eine Draufsicht auf eine erfindungsgemäße Vorrichtung, wie sie z.B. in der Fig. 1 gezeigt ist. So ist mit "unten", derjenige Rand gemeint, der in dieser Draufsicht zum unteren Blattrand zeigt. Dreht man die Vorrichtung um 180°, so können die jeweiligen Ränder auch weiterhin mit den gleichen Bezeichnungen gekennzeichnet sein, so dass der rechte Rand nun links am Blattrand liegt etc.

### KURZE BESCHREIBUNG DER ZEICHNUNGEN

- Fig. 1: zeigt eine Draufsicht einer ersten beispielhaften Ausführungsform einer erfindungsgemäßen Vorrichtung zur elektronischen Erfassung einer Benutzereingabe wie beispielsweise eine Unterschrift in einer für einen Rechtshänder bestimmten Schreibposition,
- Fig. 2: zeigt eine Draufsicht der in der Fig. 1 gezeigten erfindungsgemäßen Vorrichtung zur elektronischen Erfassung einer Benutzereingabe wie beispielsweise eine Unterschrift in einer zweiten Schreibposition, die für einen Linkshänder geeignet ist,
- Fig. 3: zeigt eine Seitenansicht von rechts der in der Fig. 1 gezeigten erfindungsgemäßen Vorrichtung zur elektronischen Erfassung einer Benutzereingabe wie beispielsweise eine Unterschrift,
- Fig. 4: zeigt eine Draufsicht der von einem Rechtshänder benutzten beispielhaften Ausführungsform der erfindungsgemäßen Vorrichtung gemäß der Fig. 1,
- Fig. 5: zeigt eine Draufsicht der von einem Linkshänder benutzten beispielhaften Ausführungsform der erfindungsgemäßen Vorrichtung gemäß der Fig. 2,
- Fig. 6: zeigt eine Draufsicht der in der Fig. 1 und 2 gezeigten Vorrichtung zur elektronischen Erfassung einer Benutzereingabe wie beispielsweise eine Unterschrift, wobei das vordere Gehäuseteil entfernt ist und die einzelnen Baugruppen, die im Gehäuseinneren untergebracht sind, ersichtlich sind,
- Fig. 7: zeigt eine perspektivische Ansicht eines Gehäuserückteils der in den Fig. 1 und 2 gezeigten Vorrichtung gemäß der vorliegenden Erfindung,
- Fig. 8: zeigt eine perspektivische Ansicht der Innenseite des Gehäusevorderteils der in den Fig. 1 und 2 gezeigten Vorrichtung gemäß der vorliegenden Erfindung,
- Fig. 9: zeigt eine Vorderansicht einer weiteren beispielhaften Ausführungsform einer erfindungsgemäßen Vorrichtung zur elektronischen Erfassung einer Benutzereingabe wie beispielsweise eine Unterschrift, und
- Fig. 10: zeigt eine Seitenansicht von rechts der in der Fig. 9 gezeigten erfindungsgemäßen Vorrichtung.

### BESCHREIBUNG VON BEISPIELHAFTEN AUSFÜHRUNGSFORMEN DER VORLIEGENDEN ERFINDUNG

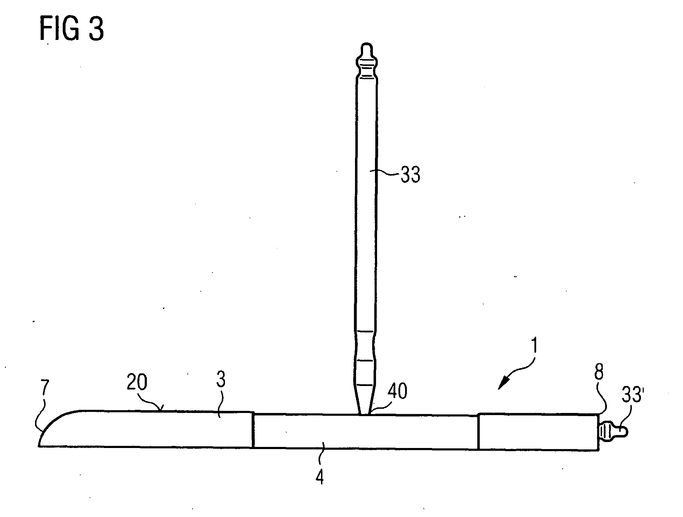

Die in der Fig. 1 gezeigte Draufsicht einer ersten beispielhaften Ausführungsform der vorliegenden erfindungsgemäßen Vorrichtung 1 zur elektronischen Erfassung von Benutzereingaben wie beispielsweise eine Unterschrift umfasst ein grundsätzlich rechteckiges oder quadratisches Gehäuse 2, das aus einem vorderen Gehäuseteil 3 und einem hinteren Gehäuseteil 4 besteht. In dem vorderen Gehäuseteil 3 befindet sich eine längliche Rechtecköffnung oder Ausschnitt 10. In bzw. unterhalb der Rechtecköffnung 10 ist ein Eingabefeld 13 platziert, auf dem mit einem Stift 33, wie er in der Fig. 3 gezeigt ist, eine Eingabe, z.B. eine Unterschrift 34, geleistet werden kann.

Das Gehäuse 2 hat in der gezeigten Draufsicht einen rechten Rand 5, einen linken Rand 6, einen unteren Rand 7 und einen oberen Rand 8. diese Nomenklatur für die Ränder 5-8 des Gehäuses 2 kann ohne weiteres auch auf die Ränder der Rechtecköffnung verwendet werden.

Das Eingabefeld 13 ist von an sich bekannter Bauart, so dass grundsätzlich keine weiteren Erläuterungen zu dessen Aufbau und Funktionsweise notwendig sind. Der guten Ordnung halber wird auf bisherige Veröffentlichungen der StepOver GmbH / Deutschland verwiesen, die beispielsweise unter den Markennamen: blueMobile Pad, plusPad, blueM Pad und +Pad II/III sogenannte Signaturpads mit entsprechendem Eingabefeld vertreibt. Das Eingabefeld 13 kann in Form einer Abtastvorrichtung ausgebildet sein, die mittels eines Stifts 33, wie er beispielsweise in der Fig. 3 gezeigt ist, betätigbar ist. Es ist damit möglich, die Koordinaten des auf der Abtastvorrichtung 13 zu leistenden Schriftzugs bzw. der Unterschrift 34 und/oder des Betätigungsdrucks während der Eingabe zu erfassen. Die Unterschrift 34 liegt dann in Form eines analogen oder digitalen Datensatzes vor. Außerdem kann eine Echtzeituhr in der vorliegenden Vorrichtung 1 zur elektronischen Erfassung einer Benutzereingabe integriert sein, so dass jedem erfassten Datensatz der Schriftzugkoordinaten und/oder des Betätigungsdruckes ein von der Echtzeituhr erzeugter Zeitstempel zugeordnet werden kann. Bevorzugt wird jedem erfassten Datensatz der Schriftzugkoordinaten und/oder des Betätigungsdrucks ein Identifikationscode hinzugefügt, der für die zur Erfassung verwendeten Vorrichtung individualisiert ist. Dieser Identifikationscode kann in einem in dem Gehäuse 2 angeordneten, vorzugsweise als ROM ausgebildeten Speicherchip gespeichert sein. Eine weitere Verbesserung der Datensicherheit wird erreicht, wenn ein in dem Gehäuse 2 angeordneter Prozessor bei jeder Benutzereingabe einen die Eingabe individualisierenden Prozessidentifikationscode erzeugt und dem Datensatz der Schriftzugkoordinaten und/oder des Betätigungsdrucks hinzufügt. Für weitere Einzelheiten wird auf die Offenbarung der DE 10 2006 000 859.6 verwiesen.

Wie in der Fig. 1 ersichtlich, ist das Eingabefeld 13 gegenüber dem Gehäuse 2 außermittig platziert. Im vorliegenden Fall ist der Abstand zwischen dem linken Gehäuserandes 6 des Gehäuses 2 und dem linken Rand 14 des Eingabefelds 14 kleiner als der Abstand zwischen dem rechten Gehäuserand 5 des Gehäuses 2 und dem rechten Rand 15 des Eingabefelds 13. Durch diese spezielle Anordnung ist es erstmals möglich, dass ein Rechtshänder mit dem Stift 33 auf dem Eingabefeld 13 in einer natürlichen Hand-Unterarmstellung auf dem Eingabefeld 13 eine Eingabe 34 leisten kann, wenn er gleichzeitig zumindest einen Teil seiner Hand, die den Stift 33 hält, auf der als Handauflagefläche 20 ausgebildeten bildenden Teils des vorderen Gehäuseteils 3 aufliegt. Diese Handauflagefläche 20 ist der Bereich zwischen dem unteren Rand 7 des Eingabefelds 13 und dem unteren Gehäuserand 16 des Gehäuses 2. Der Versatz des Eingabefelds 13 wird auch durch den Abstand 28 zwischen der Mittellinie 22 des Gehäuses 2 und der Mittellinie 24 des Eingabefelds 13 deutlich.

Die Betriebsbereitschaft der erfindungsgemäßen Vorrichtung, wie sie in der Fig. 1 gezeigt ist, wird durch eine LED-Leuchte 32, die im linken unteren Bereich des Gehäuses 2 als waagrechtes längliches Element angedeutet ist. Diese LED-Leuchte 32 kann beispielsweise grün leuchten, wenn eine Unterschrift erfasst werden soll, orange/gelb, wenn die Betriebsbereitschaft gegeben ist, sie kann rot leuchten, wenn eine Störung vorliegt.

Die elektrische Versorgung der in der Fig. 1 gezeigten erfindungsgemäßen Vorrichtung zum Erfassen einer Benutzereingabe wie eine Unterschrift 34 erfolgt über ein hier nicht gezeigtes Kabel, das an einem Rand 5, 6, 7 oder 8 des Gehäuses 2 herausgeführt ist. Eventuell ist auch eine kabellose Ausgestaltung möglich. In diesem Fall erfolgt die Energieversorgung über Batterien oder zumindest einen Akku (wideraufladbare Batterie).

Wie in der Fig. 1 gezeigt, ist eine Einstecköffnung 40 im Gehäuse 2 zwischen dem rechten Gehäuserand 5 und dem rechten Rand 15 des Eingabefelds 13 vorhanden, in die die Spitze des Stifts 33 einsteckbar ist. Somit kann in bequemer Weise der Stift 33 griffbereit festgelegt sein. Um zu vermeiden, dass der Stift 33 abhanden kommt, ist weiterhin noch eine der Länge des Stifts 33 angepasste Aufnahmeöffnung im linken oberen Randbereich des Gehäuses 2 vorhanden, in die der Stift 33 fast vollständig einsteckbar ist, so dass nur noch das hintere Ende des Stifts 33 herausragt. Diese eingesteckte Stellung ist in der Fig. 3 mit 33' gekennzeichnet.

Aus der Fig. 3, die eine Seitenansicht der in der Fig. 1 gezeigten Ausführungsform der vorliegenden Erfindung ist, ist der in die Einstecköffnung 40 eingesteckte Stift 33 gezeigt. Das Ende des Stifts 33 ist als dünner Steg ausgebildet, so dass er gut auch in eingesteckter Stellung 33' ergreifbar ist. Aus der Darstellung der Fig. 3 ist auch sehr gut erkennbar, dass der untere Gehäuserand 7 des Gehäuses 2 abgerundet ist. Dieser Rand 7 kann auch als Abflachung oder Schräge ausgebildet sein. Es soll dadurch eine bequeme Handauflage auf dem Handauflagebereich 20 des Gehäuses 2 während einer Benutzereingabe möglich sein. Aus der Darstellung der Fig. 1 ist ersichtlich, dass aus designtechnischen Gründen auch der Rand 8 abgerundet ist. In der Seitenansicht der Fig. 3 ist ersichtlich, dass der Rand 8 stattdessen als senkrechte Wand zur Oberseite des Gehäuses 3 ausgebildet sein kann.

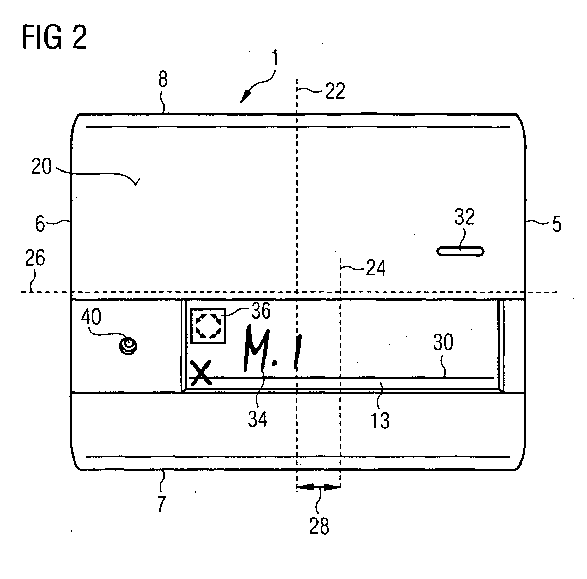

In der Fig. 2 ist eine Draufsicht auf eine weitere erfindungsgemäße Ausführungsform einer Vorrichtung zum Erfassen von Unterschriften gezeigt. Im Unterschied zu dem in der Fig. 1 gezeigten Ausführungsbeispiel ist hier das Eingabefeld 13 rechtsseitig auf der Vorderseite des Gehäuses 2 angeordnet und der Abstand zwischen dem Gehäuserand 5 und dem Rand 15 des Eingabefelds 13 ist kleiner als bei der in der Fig. 1 gezeigten Ausführungsform. Diese Ausführungsform ist für einen Linkshänder bestimmt. Tatsächlich sind die Ausführungsformen der Fig. 1 und 2 identisch, allerdings ist die Ausführungsform der Fig. 2 gegenüber der der Fig. 1 um 180° gedreht.

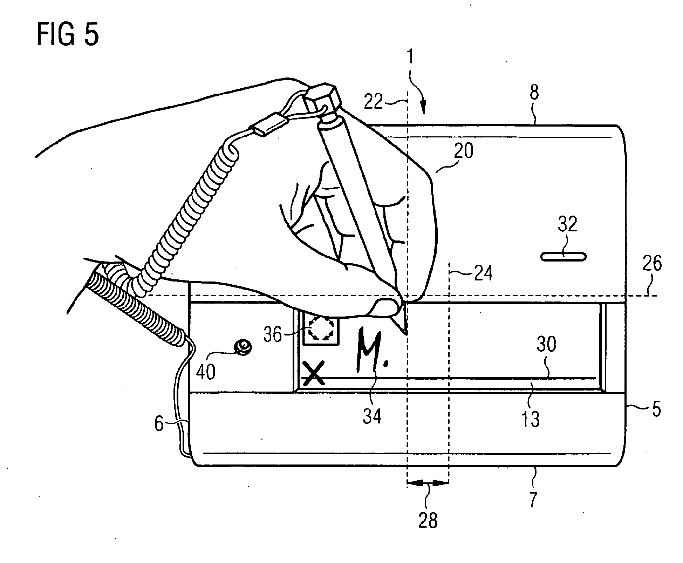

In beiden Ausführungsformen der Fig. 1 und 2 ist das Eingabefeld 13 dahingehend besonders ausgebildet, dass eine Unterschriftslinie 30 angezeigt wird, auf der die Unterschrift 34 dann von einem Benutzer mittels des Stifts 33 zu leisten ist, welche dann auch in Echtzeit während des Unterzeichnens auf dem, unter dem transparenten Eingabefeld liegenden, Bildschirm angezeigt wird (elektronische Tinte). Weiterhin ist im Eingabefeld 13 in der rechten oberen Ecke gemäß der Darstellung der Fig. 1 ein spezielles Symbol 36 angezeigt, das, wenn es mittels des Stifts 33 angetippt wird, bei der Erfassung berücksichtigt, dass die Unterschrift 34 auf dem Eingabefeld 13 bei um 180° gedrehtem Gehäuse 2, wie es in der Fig. 2 und 5 gezeigt ist, von einem Benutzer, der Linkshänder ist, geleistet wird.

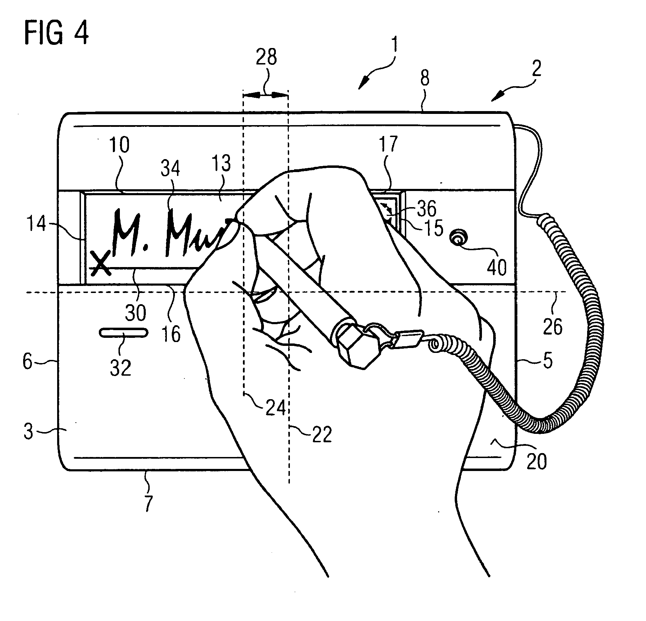

Bei der für einen Linkshänder geeigneten Positionierung der erfindungsgemäßen Vorrichtung 1, wie sie in der Fig. 2 und 5 gezeigt ist, ist die Handauflagefläche 14 in der Draufsicht oben liegend und das Eingabefeld 13 ist in der rechten unteren Ecke des Gehäuses angeordnet. Damit kann ein Linkshänder in natürlicherer Position der linken Hand auf dem Eingabefeld 13 eine Unterschrift 34 leisten. Durch das Antippen des Symbols 36 wird die Unterschriftslinie 30 in der in der Fig. 2 und 5 gezeigten Stellung des Gehäuses am unteren Rand des Eingabefelds 13 angezeigt und das Symbol 36 an der linken oberen Ecke des Eingabefelds 13. Soll nach einem Linkshänder dann wieder ein Rechtshänder unterschreiben, so wird wiederum das Symbol 36 angetippt und das Gehäuse 2 gedreht, so dass es wiederum die Lage gemäß der Fig. 1 und 4 einnimmt. Dann kann wiederum die Unterschrift 34 durch einen Rechtshänder geleistet werden.

Wie in den Fig. 1, 2 und 4, 5 dargestellt, ist das Eingabefeld 13 gegenüber dem Gehäuse 2 außermittig platziert. Insbesondere wird dies deutlich, dadurch dass die Symmetrielinie 22, die das Gehäuse 2 in der in der Fig. 1 gezeigten Draufsicht in zwei gleiche Hälften teilt, in einem Abstand 28 zur Symmetrielinie 24 des Eingabefelds 13 liegt. Der seitliche Versatz 28 des Eingabefelds 13 zu der Symmetrielinie 22 des Gehäuses 2 beträgt beispielsweise ca. 20-40 mm, insbesondere 30 mm.

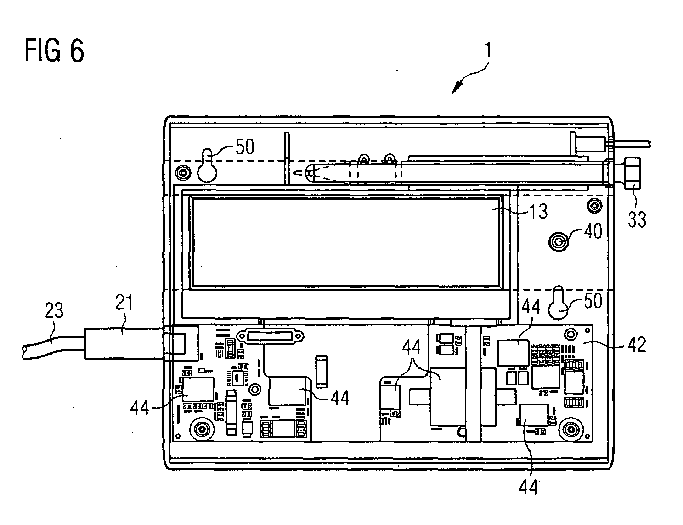

Die Fig. 6 zeigt das "Innenleben" der in den Fig. 1-3 gezeigten Ausführungsform einer erfindungsgemäßen Vorrichtung 1 zum elektronischen Erfassen einer Unterschrift 34. Wie ersichtlich, sind die elektronischen Bauteile 44 auf einer Platine 42 platziert, die unterhalb der Handauflagefläche 20 des Gehäuses 1 angeordnet ist und nicht mehr unterhalb des Eingabefelds 13 wie bisher. Dadurch ist eine insgesamt dünnere Ausgestaltung der Gesamtvorrichtung 1 möglich, wie sich insbesondere aus der Seitenansicht gemäß der Fig. 3 ergibt. Für den Fall, dass die Vorrichtung 1 an einer Wand oder auch an einem Tisch befestigt werden soll, sind im hinteren Gehäuseteil Öffnungen 50 vorhanden, mittels derer die gesamte Vorrichtung 1 in mit Schrauben fixiert werden kann.

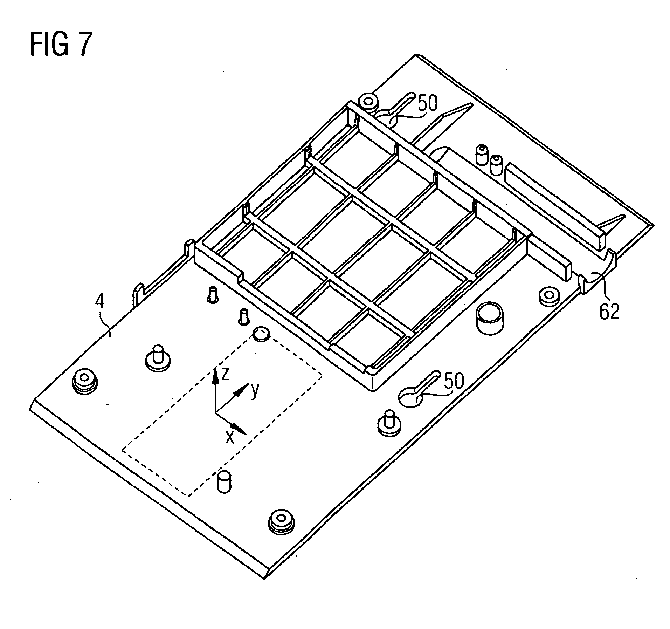

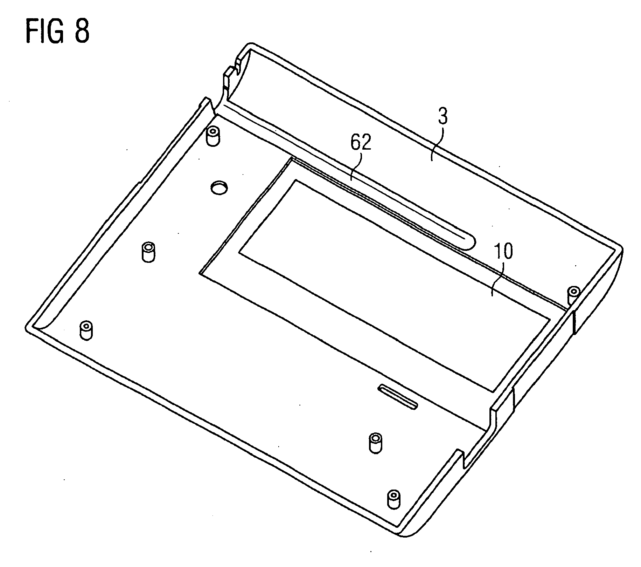

Der Vollständigkeit halber ist in der Fig. 7 noch die Innenseite des Gehäuserückteils 4 gezeigt. Dies ist hier als Kunststoffspritzteil ausgebildet. Die Fig. 8 zeigt die Innenseite des Vorderteils 3 des Gehäuses 1.

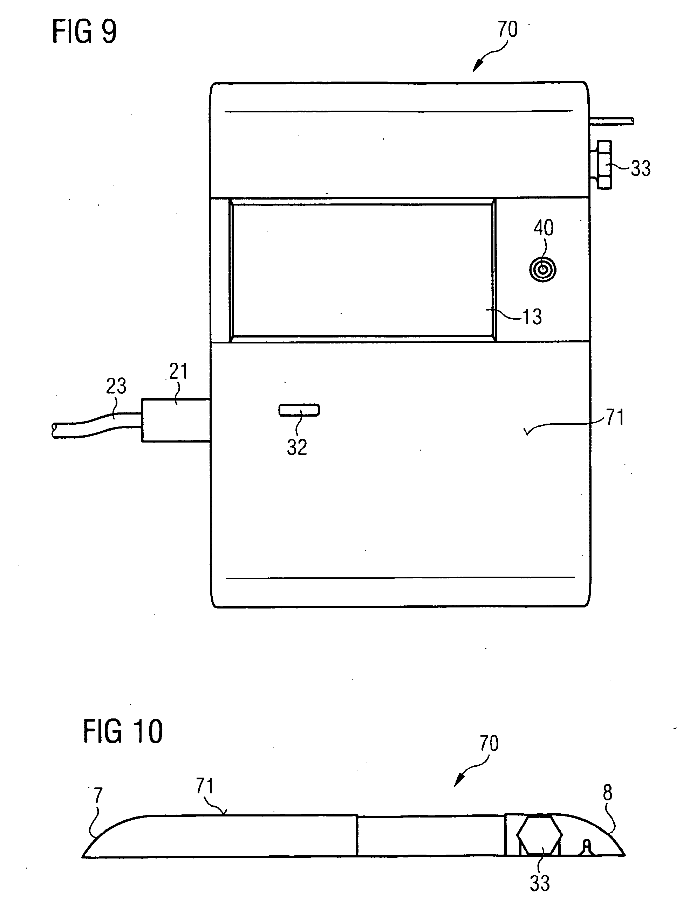

Bei der in der Fig. 9 gezeigten Vorderansicht einer weiteren beispielhaften Ausführungsform einer erfindungsgemäßen Vorrichtung 70 zum elektronischen Erfassen einer Unterschrift 34 gleichen die wesentlichen Elemente der in den Fig. 1-5 gezeigten Ausführungsform einer erfindungsgemäßen Vorrichtung 1. Im Gegensatz zu der in den Fig. 1-5 gezeigten Ausführungsform ist hier das Handauflagefeld 71 größer ausgebildet. Im Übrigen ist das Daten-/Netzkabel 22 mit dem Stecker 21 auf der linken Seite des Gehäuses angeordnet. Der Stift 33 ist in einer oberen Einstecköffnung untergebracht.

Die größere Ausgestaltung der Handauflagefläche 71 hat den Vorteil, dass eine Person, die eine Unterschrift 34 auf dem Eingabefeld 13 zu leisten hat, sich mit der ganzen Hand auf dem Gehäuse und insbesondere der Handauflagefläche 71 abstützen kann und nicht ein Teil auf dem darunter liegenden Tisch oder dergleichen ablegen muss. Somit kann das Abstützen und Schreiben noch bequemer sein als bei der Ausführungsform gemäß den Fig. 1-5.

## Patentansprüche

1. Vorrichtung (1) zur elektronischen Erfassung einer handschriftlichen Benutzereingabe (34) umfassend:
- ein Gehäuse (2), das eine Vorderseite (3), eine der Vorderseite (3) gegenüberliegende Rückseite (4), einen rechten Gehäuserand (5), einen dem rechten Gehäuserand (5) gegenüberliegenden linken Gehäuserand (6), einen unteren Gehäuserand (7) und einen dem unteren Gehäuserand (7) gegenüberliegenden oberen Gehäuserand (8) aufweist,
- ein Eingabefeld (13), das dazu ausgebildet ist, eine handschriftliche Benutzereingabe (34), die ein Benutzer mit Hilfe einer Schreibeinrichtung (33) auf dem Eingabefeld (13) leistet, elektronisch zu erfassen, und das auf der Vorderseite (3) des Gehäuses (2) asymmetrisch zwischen dem unteren Gehäuserand (7) und dem oberen Gehäuserand (8) angeordnet ist,
**dadurch gekennzeichnet, dass**
das Eingabefeld (13) asymmetrisch zwischen dem rechten Gehäuserand (5) und dem linken Gehäuserand (6) angeordnet ist und umschaltbar ist, so dass in einer ersten Benutzungsposition eine Benutzereingabe (34) lagegerecht elektronisch erfassbar ist und in einer zweiten Benutzungsposition, die von der ersten Benutzungsposition verschieden ist, eine Benutzereingabe wiederum lagegerecht elektronisch erfassbar ist und dabei die für einen Benutzer beim Unterschreiben auf dem Eingabefeld (13) zur Verfügung stehende Handauflagefläche (20) auf der Vorderseite (3) des Gehäuses (2) sowohl in der ersten Benutzungsposition als auch in der zweiten Benutzungsposition vergrößert ist.

2. Vorrichtung nach Anspruch 1, **dadurch gekennzeichnet, dass** auf dem Eingabefeld (13) als Eingabeelement ein visuelles Symbol (36) sichtbar ist, das aktivierbar ist, so dass eine Umschaltung des Eingabefelds (13) von einer Benutzungsposition in eine andere Benutzungsposition erfolgt.

3. Vorrichtung nach einem der voranstehenden Ansprüche, **dadurch gekennzeichnet, dass** die elektronischen Bauelemente (44), die zum Betrieb des Eingabefelds (13) und für die elektronische Erfassung der Benutzereingabe (34) notwendig sind, im Gehäuseinnern zwischen dem unteren Gehäuserand (7) und dem Benutzereingabefeld (13) platziert sind.

4. Vorrichtung nach einem der voranstehenden Ansprüche, **dadurch gekennzeichnet, dass** das Gehäuse (2) eine maximale Dicke von gleich oder weniger als 1,3 cm aufweist.

5. Vorrichtung nach einem der voranstehenden Ansprüche, **dadurch gekennzeichnet, dass** das Eingabefeld (13) dazu ausgebildet ist, die handschriftliche Benutzereingabe (34) und/oder zumindest ein Eingabeelement darzustellen.

## Claims

1. A device (1) for electronic capture of a handwritten user input (34) comprising:
- a housing (2), which includes a front side (3), a rear side (4) opposite to the front side (3), a right housing edge (5), a left housing edge (6) opposite to the right housing edge (5), a lower housing edge (7) and an upper housing edge (8) opposite to the lower housing edge (7),
- an input field (13), which is constructed to electronically capture a handwritten user input (34), which a user makes on the input field (13) using a writing device (33), and which is disposed on the front side (3) of the housing (2) asymmetrically between the lower housing edge (7) and the upper housing edge (8),
**characterized in that**
the input field (13) is arranged asymmetrically between the right housing edge (5) and the left housing edge (6) and can be switched, so that, in a first usage position, a user input (34) is electronically captureable in an orientation-specific manner and, in a second usage position, which is different from the first usage position, a user input is again electronically captureable in an orientation-specific manner and thereby the hand-resting surface (20) provided for the user when signing on the input field (13) on the front side (3) of the housing (2) is enlarged in both the first usage position and the second usage position.

2. The device according to claim 1, **characterized in that** a visual symbol (36) acting as an input element is visible on the input field (13), which symbol is activatable so that a switching of the input field (13) from one usage position into another usage position takes place.

3. The device according to any one of the preceding claims, **characterized in that** the electronic components (44), which are required for the operation of the input field (13) and for the electronic capture of the user input (34), are located in the housing interior space between the lower housing edge (7) and the user input field (13).

4. The device according to any one of the preceding claims, **characterized in that** the housing (2) has a maximum thickness equal to or less than 1.3 cm.

5. The device according to any one of the preceding claims, **characterized in that** the input field (13) is constructed to display the handwritten user input (34) and or at least one input element.

## Revendications

1. Dispositif (1) pour la saisie électronique d'une entrée d'utilisateur manuscrite (34) comprenant :
un boîtier (2), qui présente une face avant (3), une face arrière (4) opposée à la face avant (3), un bord de boîtier droit (5), un bord de boîtier gauche (6) opposé au bord de boîtier droit (5), un bord de boîtier inférieur (7) et un bord de boîtier supérieur (8) opposé au bord de boîtier inférieur (7),
un champ de saisie de données (13), qui est conçu de manière à saisir électroniquement une entrée d'utilisateur manuscrite (34), qu'un utilisateur effectue à l'aide d'un système d'écriture (33) sur le champ de saisie de données (13), et qui est aménagé sur la face avant (3) du boîtier (2) en position asymétrique entre le bord de boîtier inférieur (7) et le bord de boîtier supérieur (8),
**caractérisé en ce que** :
le champ de saisie de données (13) est agencé en position asymétrique entre le bord de boîtier droit (5) et le bord de boîtier gauche (6) et peut être commuté de sorte que, dans une première position d'utilisation, une entrée d'utilisateur (34) puisse être saisie électroniquement en position correcte et que, dans une seconde position d'utilisation, qui est différente de la première position d'utilisation, une entrée d'utilisateur puisse à nouveau être saisie électroniquement en position correcte et qu'en l'occurrence, la surface d'appui manuel (20) mise à la disposition d'un utilisateur pour apposer sa signature sur le champ de saisie de données (13) sur la face avant (3) du boîtier (2) soit agrandie tant dans la première position d'utilisation que dans la seconde position d'utilisation.

2. Dispositif selon la revendication 1, **caractérisé en ce qu'**il peut apparaître de manière visible sur le champ de saisie de données (13) comme élément de saisie un symbole visuel (36), lequel peut être activé de manière à commuter le champ de saisie de données (13) d'une position d'utilisation à une autre position d'utilisation.

3. Dispositif selon l'une quelconque des revendications précédentes, **caractérisé en ce que** les composants électroniques (44), qui sont nécessaires au fonctionnement du champ de saisie de données (13) et à la saisie électronique de l'entrée d'utilisateur (34), sont disposés à l'intérieur du boîtier entre le bord de boîtier inférieur (7) et le champ de saisie de données d'utilisateur (13).

4. Dispositif selon l'une quelconque des revendications précédentes, **caractérisé en ce que** le boîtier (2) présente une épaisseur maximale égale ou inférieure à 1,3 cm.

5. Dispositif selon l'une quelconque des revendications précédentes, **caractérisé en ce que** le champ de saisie de données (13) est conçu de manière à présenter l'entrée d'utilisateur manuscrite (34) et/ou au moins un élément de saisie.
